# EUROPÄISCHE PATENTSCHRIFT

(11) **EP 0 469 309 B1**
(45) Veröffentlichungstag und Bekanntmachung des Hinweises auf die Patenterteilung: **15.12.1999**
(21) Anmeldenummer: 91110873.6
(22) Anmeldetag: 01.07.1991
(51) Int. Cl.: B32B 5/26, D04H 1/00, D04H 1/42

(54) **Faserstruktur und daraus erhaltenes Formteil sowie Verfahren zu dessen Herstellung**
Fibrous structure and moulded article thereof as well as method for the production
Structure en fibres et article moulé obtenu ainsi que le procédé pour sa fabrication

(30) Priorität: 06.07.1990 DE 4021628
(43) Veröffentlichungstag der Anmeldung: 05.02.1992
(73) Patentinhaber: KIHA-TEXTILIEN GmbH, D-96049 Bamberg (DE); Finsel, Norbert, D-96237 Ebersdorf (DE); CARUSO GmbH, D-96237 Ebersdorf (DE)
(72) Erfinder: Kinkel, Werner-Helmut, W-8600 Bamberg (DE); Finsel, Norbert, W-8624 Ebersdorf-Coburg (DE)
(74) Vertreter: von Füner, Alexander, Prof.h.c. Dr.

(56) Entgegenhaltungen:
- EP-A- 0 078 682
- EP-A- 0 277 707
- EP-A- 0 344 365
- EP-A- 0 423 395
- DE-A- 3 013 134
- MELLIAND TEXTILBERICHTE Bd. 69, Nr. 11, 1988, HEIDELBERG, D WALTER LOY: 'TECHNISCHE DATEN DISPERGIERTER BINDEMITTEL UND IHRE BEDEUTUNG FÜR DIE VLIESVERFESTIGUNG'

## Beschreibung

Aus dem GM 88 07 017.4 ist ein Polsterteil für Sitz-, Liegemöbel oder dergleichen bekannt, das als lösbare Auflage oder als fest integrierter Bestandteil mit einer ein Vlies beinhaltenden Polsterfüllung versehen ist, wobei die Polsterfüllung Bindefasern aus thermofusionsfähigem Werkstoff, insbesondere sogenannte Kernmantelfasern, aufweist und dieser Bindefaservliesstoff preßgeformt ist. Als Vliesstoff kann man auch ein Gemisch aus Bindefasern und Normalfasern einsetzen, die untereinander thermofusionsfähig verbunden sind. Die Fasern können Polyesterfasern sowie Kernmantelfasern in einem Polyesterkern und einem Mantel aus Copolyestern darstellen.

Aufgabe der Erfindung war es nun, mehrere Grundmaterialien mit gleichen oder zumindest ähnlichen Eigenschaften zu finden, welche mit den z.Zt. in der Fahrzeugindustrie überwiegend und notwendigerweise einzusetzenden Oberflächenmaterialien sich so vertragen, daß die weiteren Erfindungsziele noch erfüllbar waren, und dafür ein aus Fasern aufgebautes Halbzeug bereitzustellen, welches durch die Auswahl dieser Grundmaterialien, Konstruktion der Faserstrukturen, Auswahl der Faserdicken, der Hauptschichtdicken und der Stapellängen und Mischverhältnisse, ohne Einsatz von jedweden anderen Bindemitteln zu auch tragenden Formteilen gestaltet werden kann, welche in Einbaulage durch das Eigengewicht ihre Form nicht verändern. Die Teile sollten womöglich gegenüber den zur Zeit eingesetzten ein geringeres Eigengewicht haben, mit niedrigen energetischen Kosten in der Herstellung auskommen und aufgrund ihres Werkstoffs auf leichteren und damit weniger aufwendigen, preiswerter ausgelegten Maschinen und Werkzeugen eine Produktion ermöglichen. Hierbei ist insbesondere an eine Wiederverwertung der eingesetzten Werkstoffe auch bei oberflächenkaschierten Teilen gedacht, eine Produktion ohne Abfall und eine Entlastung des Arbeitsplatzes wie auch des späteren Anwendungsbereiches in bezug auf die dort z.Zt. noch benötigten und vorhandenen flüchtigen, zum Teil toxischen Substanzen wie z.B. Isocyanate, Formaldehyd, Styrol und FCKW.

Weiter sollte die Oberflächenveredelung weitgehend in den Verformungsprozeß integriert werden, wobei es z.B. auch darum ging, in einem Formteil mit einem Werkstoff Bereiche mit hoher Verdichtung und Bereiche mit niedrigerer Verdichtung darzustellen. Mit diesen Faserstrukturen galt es, Forderungen in bezug auf Schallabsorption, Vibration und Wärme z.B. durch schichtigen Aufbau zu erreichen. Wichtig war es weiter, die z.Zt. eingesetzten Oberflächenmaterialien so auf das Produkt aufzubringen, daß selbst dann, wenn eine artgleiche Oberfläche aus modischen oder technischen Gründen noch nicht möglich ist, durch Trennen der Oberfläche vom Trägermaterial ein Wiederverwerten des nach Volumengewicht größeren Werkstoffanteils möglich bleibt, wie auch seines gegebenenfalls separierten Dekormaterials. Ziel war es, sich den Anforderungen der Zukunft an die Industrie auf Entsorgung zu stellen, welche vom Gesetzgeber nach dem Verursacherprinzip als Vorstellung bereits besteht.

Diese Problematik und die vorgenannten Aufgaben werden, wie aus den nachstehenden Ansprüchen ersichtlich ist, gelöst.

Mit den hier bezeichneten Materialien kann dies in vielen Industriebereichen, anders als bei den bisher dort aus unterschiedlichsten Werkstoffen zusammengesetzten Formteilen, heute schon realisiert werden, im Rahmen des echten stofflichen Wiederverwertens der bis zur Rückführung auf das Ausgangsmaterial, hier einer Faser, möglich ist, wobei Energierecycling in Form von Verbrennen mit den bis heute nicht gelösten Problemen oder Belastungen wertvollen Deponieraums vermieden wird.

Die Faser A) kann eine Vollfaser oder eine Hohlkammerfaser sein, oder eine Faser mit einem besonderen Eigenschaftsbild, z.B. Trevira CS für schwer entflammbar, des weiteren eine farbige Faser, bei der die Faserstruktur dann ohne zusätzliche Dekorschicht als Sichtformteil genutzt werden kann. Die Mehrkomponentenfaser B besteht aus einer sogenannten Mehrschichtfaser, z.B. Side-by-Side-Type oder Mantel-kernfaser oder einer Fibrillentype, üblicherweise aber als Faser aus einem Kern und einem Mantel, wobei der Schmelzpunkt des Kernmaterials üblicherweise oberhalb des Schmelzpunktes des Ummantelungsmaterials liegt.

Das Kennzeichnende am erfindungsgemäßen Faserkörper ist, daß er jeweils aus Fasern der gleichen chemischen Art aber unterschiedlichem Eigenschaftsbild zusammengesetzt sein muß, also z.B. aus Hohlkammerfasern zur Erhöhung der Sprungelastizität, und dann bei der Mehrkomponentenfaser z.B. aus einer Polyesterfaser, bestehend aus Polyestermantel und Polyesterkern.

Als Polyesterfaser A) kann beispielsweise in Frage kommen Trevira Spinnfaser UCCK 035/X, als Mehrkomponentenpolyesterfaser, z.B. Trevira Type 252. Als Polyamidfasern A) können eingesetzt werden z.B. PA 6 Grilon, als Mehrkomponenten-Polyamidfaser B) können eingesetzt werden z.B. PA 6,6 Dipolyn.

Als Polyolefinfasern A) kommen z.B. Fasern aus HDPE und LDPE und PP in Frage, z.B. Danaklon EA oder Danaklon Soft, Danaklon ES Typen als Mehrkomponentenfaser B).

Als Hohlfaser kann z.B. Dupont-Polyester Fiberfill Type D202 verwendet werden.

Die Einfachfasern A) besitzen eine Dicke von 3 bis 1000 dtex, vorzugsweise von 3 bis 170, insbesondere 3 bis 30 dtex. Sie besitzen ferner eine Stapelfaserlänge von 20 bis unendlich, vorzugsweise 30 bis 80 mm, insbesondere 40 bis 65 mm.

Die Mehrkomponentenfaser B) besitzt eine Dicke von 3 bis 1000 dtex, vorzugsweise von 3 bis 170 dtex, insbesondere von 3 bis 30 dtex, sowie eine Stapelfaserlänge von 20 bis unendlich, vorzugsweise von 30 bis 80 mm, insbesondere von 40 bis 65 mm.

Alternativ zur eingesetzten Mehrkomponentenfaser, die die Aufgabe hat, die Fasern zu verschmelzen und die Steifigkeit herbeizuführen, kann in die Faserstruktur auch ein thermoplastisches Pulver des jeweiligen Polymerbereiches beigemengt werden.

Das Polymerpulver wird in einer Menge von 10 bis 60 Gew.-%, vorzugsweise von 20 bis 50, insbesondere von 30 bis 40 Gew.-% zugesetzt.

Die erfindungsgemäße Faserstruktur kann nur eine einzige Hauptschicht umfassen, sie sollte jedoch um Schall, Vibration, Wärmedämmung und unterschiedliche Verdichtungen besser darzustellen, auch zwei oder mehrere Faserhauptschichten aufweisen, die, was die Fasermischungen angeht, in sich homogen sind. Die Mischungsverhältnisse in den Hauptschichten können aber auch unterschiedlich sein. Das heißt aber, daß die Hauptschichten trotzdem immer aus dem gleichen Material sind, also entweder Polyester oder Polyamid oder Polyolefin.

Bevorzugt für den Bereich Dämmung ist beispielsweise ein thermisch verfestigter Faserkörper, dessen obere Hauptschicht einen Anteil von 0 bis 40 % Mehrkomponentenfasern, Restfaser A), z.B. Typ Füllfaser, und die Unterschicht von 20 bis 50 % Mehrkomponentenfasern, Restfaser A) enthält, wobei die Fasermischungen jeweils innerhalb der entsprechenden Hauptschicht homogen vermischt sind. Die Faserlängen liegen hier im unteren Bereich. Zusätzlich ist die Matte einseitig mechanisch verfestigt. Die Dicken der Hauptschichten sind nicht kritisch, sie werden nach den Bedürfnissen ausgewählt.

Aufgabe der Erfindung war es weiter, wo es aus technischen Gründen angebracht ist, durch eine deutliche Gewichtsreduzierung bei den darzustellenden Formteilen, die Wirtschaftlichkeit in Bezug auf den Einsatz dieser Faserstrukturen zu erhöhen. Dies wird erreicht durch die Herstellung sogenannter Sandwichplatten. Hierbei werden als erster Schritt Faservliesstrukturen in der beschriebenen Art und Weise, zwischen zwei Werkzeughälften gebracht. Die obere Werkzeughälfte besteht dabei im Regelfall aus einer gelochten Platte oder aber aus einer Negativform zur unteren Werkzeughälfte. Die untere Werkzeughälfte aus dem entsprechenden Gegenwerkzeug z.B. in Form von Distanzen darstellenden, regelmäßig angeordneten, zylindrischen Formen wie Kegel, Hüte, Wellen, Honigwabenstrukturen etc., in Höhe der gewünschten Dicke der angestrebten Sandwichplatte. Die durch Strahler, Kontaktwärme oder z.B. mit Heißluft vorgewärmte Faser wird in diesen kühlbaren Werkzeugen verpreßt, nimmt die gewünschte Geometrie an, und kann nach kürzester Zeit dieser Plattenform entnommen werden, wobei auch die Fertigung als Endlosbahn im Taktverfahren möglich ist. Außer dieser Fertigung zwischen Werkzeugplatten für die Distanz darstellende Faserlage ist auch eine Produktion über Kalanderwalzen mit entsprechend angelegtem Durchmesser und strukturierten Oberflächen denkbar, wobei, je nach Formgestaltung, auch mit zwei positiv/negativ ausgestatteten Walzenoberflächen oder gegen eine verformte ebene oder gewölbte formangepaßte Platte mit einer Walze im Durchlauf gearbeitet werden kann.

Die somit vorgeformte Matte wird dann im Regelfall zwischen zwei glatte, vorgewärmte Faserstrukturen oder aber polymergleiche Werkstoffe wie Folien oder z.B. Spinnvlies gebracht und zwischen Kalanderwalzen oder z.B. einer Flachbettkaschieranlage mit vorgegebenen Distanzen unter Druck und wechselnder Temperatureinwirkung ein oder beidseitig kaschiert. Dies ist durch die Möglichkeit, Fasern mit unterschiedlicher Wärmestandfestigkeit zwischen den verformten Distanzen gebenden Faserstrukturen und den polymergleichen Oberflächenmaterialien einzusetzen, gegeben. Ein Laminieren dieser glatten Oberflächenwerkstoffe über thermoplastische Kleber ist ebenfalls praktikabel.

Die Eigenschaften der Sandwichplatten sind recht vielfältig nutzbar und können durch die Auswahl der verschiedenen denkbaren geometrischen Formen, ihren einstellbaren Erweichungspunkten und unterschiedlichsten Fasermischungen sowie in Bezug auf Faserdichte und Ausformungsgeometrie, dem Anforderungsprofil der gewünschten Formteile jeweils angepaßt werden. Die Festigkeit und Steifigkeit ist dabei abhängig von den gewählten Verformungsgeometrien, ihrem Neigungswinkel, dem gegebenenfalls eingesetzten Verbundwerkstoff und dem Raumgewicht, und können den zu erzielenden Aufgaben angepaßt werden.

Bei Bauteilen, insbesondere für die Fahrzeugindustrie, können bei Einsatz dieser Sandwichplatten die extreme Verformbarkeit dieser Materialkombinationen genutzt werden. Weiter wird niedriges Gewicht bei großem Volumen und damit erhöhter Biegesteifigkeit erreicht, wobei das Verformungswerkzeug der angestrebten endgültigen Formteile auf die vorgegebenen Distanzen ausgelegt ist und in Bereichen gewünschter stärkerer Verdichtung auch eine neue Dicke bei der Verformung erzielt. Die Erhöhung der Stabilität läßt sich dabei weiter noch durch zusätzliches Gestalten von Stegen und Sicken im Formteil erreichen.

Die erfindungsgemäßen Faserstrukturen sind vielfältig einsetzbar und werden zu Formteilen verarbeitet. Dabei ist es durch die Wahl der Fasermischungen und ihre Begrenzung auf einen Werkstoff, unter Einbeziehung der z.Zt. überwiegend verwendeten Oberflächenmaterialien aus Polyester, Polyamid und Polypropylen, erstmals möglich, die Formteile im Recyclingverfahren wiederaufzubereiten. Außerdem, und das ist auch beachtlich, entstehen bei der Verarbeitung der erfindungsgemäßen Faserkörper, wie auch der Formteile keine Dämpfe oder Gase, die die Umwelt belasten, da von jeglichen lösungsmittelhaltigen Bindemitteln Abstand genommen worden ist.

Durch den Faseraufbau und zudem durch Einsatz ausschließlich von Krafteinleitung und Energie (vorwiegend Wärme) erhält die Faserstruktur ihre endgültige Form, wobei in einem Arbeitsgang Bereiche mit stark unterschiedlichen Dichten dargestellt werden können. Der Formkörper wird dabei auch als tragendes Teil in Einbaulage durch sein Eigengewicht seine Form nicht mehr verändern, sofern es nicht durch den Einsatz des Formteils gefordert ist. Durch den Anteil und die Positionierung der Mehrkomponentenfaser sowie deren Stapellänge unter Berücksichtigung der aufgewendeten Kraft und Verdichtung, unterschiedlicher Einleitung von Wärme bei den Oberflächen, somit vielfach in einem Arbeitsschritt, können wichtige Funktionen für die Schallisolierung, die Vibrationsdämmung, wie auch der Wärmeisolierung, wie schichtiger unterschiedlich verdichteter Aufbau mit wachsenden Anteilen an Faserkreuzungspunkten, erfüllt werden.

Durch den Einsatz einer thermoplastischen Haftschicht ist darüber hinaus gewährleistet, daß artfremde Dekorschichten, die einem Recycling entgegenstehen, allein durch Wärmeaktivierung entfernt werden können, so daß beide Teile dann durch Separierung wiederverwertet, gegebenenfalls entsorgt werden können.

Durch Einsatz von Endlosfasern läßt sich darüber hinaus die Reißfestigkeit, Schlagzähigkeit, Kältefestigkeit noch einmal deutlich erhöhen, um extremeren Belastungen gerecht zu werden.

Duch die Verbindung mit Teppichmaterialien und polymereinheitlichen Thermoplasten als Binder, kann auf die dort zur Zeit noch zur Fixierung der Faser und für die Verformung notwendigen Duroplaste verzichtet werden.

Durch den Einsatz von Hohlkammerfasern ist die Sprungelastizität und Dauerrückstellkraft deutlich zu erhöhen.

Die unterschiedliche Verdichtung ermöglicht es, in einem oder mehreren Arbeitsgängen Formen oder Formenkombinationen darzustellen, für die bisher in jedem Fall ein zweiter Werkstoff (hier vorwiegend Schaum) benötigt wurde, der die Wiederverwertung ausgeschlossen hat.

Die erfindungsgemäßen Faserstrukturen können in folgender Weise zu Formteilen verarbeitet werden:
a. Die aufbereiteten Fasern werden homogen vermischt, aus einem sog. Faserspeicherkasten aerodynamisch über Luft oder anderen Fluiden als Transportmedium auf verformten, perforierten oder siebartigen Werkzeugen abgelagert. Die obere Werkzeughälfte ist ebenfalls luftdurchlässig. Anschließend wird die Fasermatte wärmebehandelt (z.B. Heißluft), dabei verpreßt, über z.B. Kaltluft abgekühlt und der weiteren Oberflächenbehandlung zugeführt. Die Fasermenge und der Grad der Verdichtung läßt sich auch durch partiell unterschiedliche Luftdurchlässigkeit der Werkzeugwände, einer Vorverdichtung mit 2 klappbaren auch unterschiedlich gestalteten oberen Werkzeughälften, welche nach dem Verdichten dann noch einmal geöffnet werden, oder z.B. polymereinheitlichen Zwischenschichten (z.B. Folien), die sich unter Temperatureinwirkung auflösen, erreichen. Auch lassen sich die Fasern durch gezielt steuerbare und variable Ansaugkanäle dort konzentrieren, wo ein höherer Faseranteil gewünscht wird.
   Eine weitere Möglichkeit ist es, das Fasermaterial im Blaskanal zu erwärmen und in ein kaltes geschlossenes aber luftdurchlässiges Werkzeug zu saugen, wo die Fasern verbinden und erstarren sowie die Form des Werkzeuges annehmen. Auch hier ist die Verdichtung durch ein gesteurtes oder auch partielles Ansaugen der Luft variabel zu gestalten. Auch eine Kombination mehrerer Werkzeuge, auch mit unterschiedlichen Luftdurchgangswerten, die dann zu einem Gesamtformteil zusammengefügt werden, ist möglich.
b. Die Faserstruktur wird zuerst als Halbzeug in Form einer Matte hergestellt. Diese Matte kann zusätzlich ein- oder beidseitig mechanisch vorgefestigt werden und durchläuft einen Wärmeofen. Hier werden heiße Gase, vorwiegend Luft, durch die Faserstruktur geblasen bzw. gesaugt und anschließend über mehrere Kalanderwalzen vorverdichtet. Das so erhaltene Produkt kann danach in ein heißes Werkzeug eingelegt, verpreßt und dabei verformt, anschließend in eine Abkühlwerkzeug gelegt, gegebenenfalls endverdichtet entnommen und, sofern notwendig, weiterbearbeitet werden.
c. Das Verfahren erfolgt wie unter b beschrieben, nur daß nach dem Vorverdichten wieder perforierte, siebartige Werkzeughälften eingesetzt werden, durch die z.B. heiße Luft gesaugt wird. Anschließend wird mit z.B. kalter Luft abgekühlt und das Endprodukt entnommen.
d. Das Verfahren erfolgt wie unter b geschildert, nur daß nach der Vorverdichtung eine weitere Abkühlung erfolgt und das Halbzeug abgestapelt wird. Diese hatte kann nunmehr in einem weiteren Arbeitsgang zwischen Platten oder Kalandern an den Oberflächen bis zum "Verhauten" zur Erzielung eines Sandwicheffekts gebracht werden, in einem Umluftbereich wieder über heißer Luft, Dampf, gegebenenfalls aber auch über Strahler- oder Kontaktwärme aufheizen und zwischen gekühlten Werkzeugen ablegen. Anschließend wird verpreßt, eventuell kaschiert, das dimenionsstabile Formteil danach entnommen und bei Bedarf weiterbehandelt.

Die erfindungsgemäßen Formteile können insbesondere in der Kraftfahrzeug-, Luft- und Schienenfahrzeugindustrie zur Herstellung von jeder Art Fahrzeugauskleidung Anwendung finden. Sie sind z.B. auch für die Herstellung von PKW-Türseitenverkleidungen, Sonnenblenden, Motorraum- und Kofferraumisolierungen, Armlehnen und Dämmteilen hinter verformten Teppichen, geeignet.

Dies gilt auch in Verbindung mit vom Volumen oder Gewicht großer dimensionierten Oberflächenmaterialien, z.B. Teppichen, wenn diese die Faserstruktur als alternative Verformungs- und Fixierungsmedien sortengleich und mit thermoplastischen Folien, Pulvern, Fasern, Vliese oder einer Mischung aus diesen Produkten, als Ersatz der bisher dafür verwendeten Duroplaste oder nicht artgleichen Thermoplaste verwenden.

Wie schon oben erwähnt, können die erfindungsgmeäßen Formteile nach Verschleiß, bei Fehlproduktionen, Stanzabfällen, oder bei der Demontage bei Kfz-Teilen wieder aufbereitet werden, und zwar durch Zerkleinern. In diesem Fall läßt sich aus dem zerkleinerten Werkstoff z.B. über Verdichtung oder Schmelzkonfektionierung ein Agglomerat oder ein Granulat gewinnen. Dieses Granulat läßt sich z.B. über einen thermoplastischen Zustand in einer Schmelze zu einer Folie, einer Platte, einem Formteil extrudieren, oder wenn im wesentlichen chemisch identisches Material im Formteil existiert hat, kann eine Faser mit dem chemisch gleichen Aufbau wiedergewonnen werden. Dieselbe Verfahrensweise läßt sich einsetzen, sofern artfremde Oberflächen eingesetzt worden sind und dieselben durch Wärmeaktivierung der thermoplastischen Haftschicht entfernt werden konnten. Art und Grad der Entsorgung bei den Oberflächenmaterialien hängt von deren Werkstoffzusammensetzung ab.

### Beispiel 1 (Verfahren a)

Es soll ein Formteil für die Armauflage in einem PKW hergestellt werden. Die Ware wird nicht oberflächenkaschiert, soll aber hohe Dauerrückstellkräfte haben und Festigkeiten darstellen, wie sie in PUR-Schaum mit einem hohen Raumgewicht gegeben ist. Als Grundfaser wird eine Polyesterhohlkammerfaser der Type Dacron Fiberfill 13 dtex, 63 mm Stapellänge und als Schmelzfaser eine Trevira Type 4,4 dtex 51 mm homogen vermischt. Das Mischungsverhältnis beträgt 50/50 %. Diese Mischung wird aus einer Art Silo über Luftströmung auf einem gelochten Unterwerkzeug abgelegt und bei Erreichen des gewünschten hohen Flächengewichts das ebenfalls gelochte Oberwerkzeug geschlossen, wobei das Teil insgesamt verdichtet wird. Dabei wird dieses Werkzeug dann einer Heißluftströmung ausgesetzt, wobei Temperatur, Luftstromstärke und Strömungsdauer abhängig vom Volumen des Formteils sind. Anschließend wird das Formteil mit einem Raumgewicht von ca. 30 kg/cm³ unter Kaltluftzufuhr abgekühlt, wobei die Fasern fixiert werden. Das Teil wird nun dem Werkzeug entnommen und zur weiteren Verwendung bearbeitet.

### Beispiel 2 (Verfahren b)

In diesem Beispiel soll eine sogenannte C-Säule (Formteil zwischen Heckscheibe und hinterer Tür im PKW) hergestellt werden, unter Verwendung von Polyamidfasern Type PA 6 Grilon 7 dtex und einer Faserlänge von 60 mm und einer Mantelkernfaser Type PA 6,6 Dipolyn 4,4 dtex und einer Faserlänge von 50 mm. Die Matte wird mit einem Polyamidgewirke 170 g/m², 1 mm Dicke kaschiert. Dieses Gewirke ist vorher rückseitig mit einer Copolyamid-Schmelzkleberfolie mit 50 g/m³ beschichtet. Die Aktivierungstemperaturen liegen zwischen 120 und 130°C die Erweichungstemperatur bei 100°C. Die Matte kommt mit einer Körperwärme von 80°C aus der thermischen und mechanischen Vorverdichtung und wird in ein heißes Vorformwerkzeug gelegt. Hier erhält das Teil wieder seine benötigte Körperwärme von ca. 160°C und wird dann aus diesem Werkzeug in ein Auskühlwerkzeug gelegt.
Hier wird nun das Gewirke als Endlosbahn zwischen die Werkzeughälften geführt, mit dem Faserkörper endverpreßt und kaschiert. Die Körperwärme von zuletzt ca. 130 bis 140°C in Verbindung mit dem Druck reicht aus, die Copolyamidfolie zu aktivieren und einen Verbund herzustellen. Aus dem Auskühlwerkzeug kann ein formstabiles oberflächenveredeltes Formteil zur weiteren Bearbeitung formstabil entnommen werden.

### Beispiel 3 (Verfahren c)

Hierbei wird eine Matte aus PP Faser 17 dtex 80 mm und einer Bikomponentenfaser ES 3,3 dtex 60 mm homogen vermischt. Der Anteil Mehrkomponentenfaser:Einfachfaser liegt bei 30:70, in der oberen Hauptschicht mit einer Gesamtdicke von 25 mm und von 15:85 % bei der weiteren ebenfalls 25 mm Gesamtstärke. Sie wird zu einer Matte von 1500 g und 50 mm Dicke vorverdichtet, wobei zwischen den Lagen eine PE-Folie eingearbeitet wird und zwischengelagert wird. Diese Matte wird dann zwischen zwei luftdurchlässigen Werkzeughälften geführt, einer vorsichtig dosierten Heißluftströmung ausgesetzt, wobei das Material in Bereiche mit stark unterschiedlichen Verdichtungen verformt und verpreßt wird, um den Verformungen der Karosserie zu entsprechen. Temperatur, Strömungsgeschwindigkeit und Dauer sind wieder abhängig vom angestrebten Flächenbild des Formteils. Die verformte Matte wird anschließend direkt auf einen verformten Teppich mit einer EPDM-Schwerschichtfolie aufgepreßt. (Ein Verbund aus PP-Faserstruktur, EPDM-Schwerschicht und PP-Faserteppich ist als Polyolefin-Verbund wiederzuverwerten). Daher wird die Abkühlphase kurz gehalten und die Restwärme des Formteils ausgenutzt, um eine Verklebung der Faserstruktur mit dem vorgeformten Teppichformteil herbeizuführen.

### Beispiel 4 (Verfahren d)

Hierbei soll eine Hutablage von Kraftfahrzeugen hergestellt werden, mit als Oberware ein Nadelvlies von 340 g/m² und als Unterseite ein Nadelvlies mit 100 g/m², beide aus Polyester. Man geht dabei von einer Polyesterfasermischung mit einem Verhältnis von Polyesterfaser zur Mehrkomponentenfaser von 60:40 aus. Die Polyesterfaser hat eine Dicke von 12 dtex und eine Stapelfaserlänge von 50 mm, die Mehrkomponentenfaser, Typ Mantelkernfaser, hat eine Dicke von 4,4 dtex und eine Stapelfaserlänge von 50 mm. Aus diesen beiden Faseranteilen wird ein Faserkörper in Form einer Fasermatte mit 2000 g/m² hergestellt und wärmebehandelt. Die ursprünglich um ein mehrfaches dickere Matte wird vorverdichtet auf 40 mm und einseitig mechanisch verfestigt. Das Halbzeug wird nun in eine Art Wärmekammer geleitet und mit Heißluft oder Strahlerwärme auf 180°C erwärmt. Wichtig ist, daß diese Wärme im ganzen Faserkörper erreicht ist. Die Strömungsgeschwindigkeit, Strahlertemperatur, Stärke und Dauer ist wieder formabhängig. Danach wird die so vorbehandelte Matte zum Verformungswerkzeug transportiert und abgelegt. Das eingesetzte Copolyester-Schmelzpulver wurde auf die beiden Vliesmaterialien vorher mit 50 g bei der Oberware und mit 30 g bei der Unterware aufgesintert. Das zu kaschierende Dekormaterial, Polyster-vlies mit 340 g/m² Flächengewicht und 4 mm Dicke, wird vorher wie auch die 100 g Unterware als Endlosbahn zwischen Ober- und Unterwerkzeug geführt, wobei beide Materialien über Strahlerwärme mit ca. 90°C vorgewärmt wurden. die Ober- und Unterwerkzeuge sind gekühlt. Mit dem Verpressen und Verformen überträgt die Fasermatte ihre Eigenwärme noch auf die thermoplastische Haftschicht und geht einen festen Verbund ein. Durch das Schockgefrieren werden die Fasern fixiert und eingefroren, so daß das Formteil auch sofort gestanzt, dem Werkzeug entnommen und der Weiterbearbeitung zugeführt wird.

## Patentansprüche

1. Verfahren zur Herstellung eines Formteils, insbesondere für die Fahrzeugindustrie auf der Basis von Polyester-, oder Polyamid-, oder Polyolefinfasern, mit folgenden Schritten :
a) Fertigung einer verfestigten Faserstrukturlage aus einer oder mehreren in sich homogenen Hauptfaserschichten, die
A) Voll- und/oder Hohlkammerfasern bestehend aus Polyester-, oder Polyamid-, oder Polyolefin mit einer Dicke von 3 dtex bis 1000 dtex und länger als 20 mm;
B)
(i) Mehrkomponentenfasern zur Faserverschmelzung bestehend aus Polyester-, oder Polyamid-, oder Polyolefin mit einer Dicke von 3 dtex bis 1000 dtex und länger als 20 mm als Voll- und/oder Hohlkammerfaser, oder
(ii) ein Polymerpulver zur Faserverschmelzung bestehend aus Polyester-, oder Polyamid-, oder Polyolefin;
enthalten, wobei die Fasern A) und die Fasern B)(i) bzw. das Polymerpulver B)(ii) von der gleichen chemischen Art sind und die Fertigung thermisch und/oder mechanisch erfolgt,
b) Anordnung polymergleicher Faserstrukturlagen auf einer oder beiden Seiten der verfestigten Faserstrukturlage,
c) Verformung der Faserstrukturlagen zu einem Formteil.

2. Verfahren nach Anspruch 1, dadurch gekennzeichnet, daß die Fasern zur Fertigung der Faserstrukturlage aerodynamisch in einem Formwerkzeug abgelegt wird.

3. Verfahren nach Anspruch 1 oder 2, dadurch gekennzeichnet, daß zur Fertigung der Faserstrukturlage die Fasern durch Heißluft in einem perforierten Werkzeug erwärmt, verpreßt und anschließend abgekühlt werden.

4. Verfahren nach einem der vorhergehenden Ansprüche, dadurch gekennzeichnet, daß die Faserstrukturlage aus wenigstens zwei homogen vermischten Hauptschichten mit unterschiedlicher Mischung besteht, wobei die einer Oberfläche zuwandte Hauptschicht einen Anteil von 40 bis 100 % Mehrkomponentenfasern B), und die anderen Hauptschichten einen Anteil von 0 bis 100 % Mehrkomponentenfasern B) enthalten.

5. Verfahren nach Anspruch 4, dadurch gekennzeichnet, daß zwischen den Hauptschichten oder an den Oberflächen der Faserstrukturlage ein stabilisierendes Material gleicher chemischer Zusammensetzung zugefügt wird.

6. Verfahren nach einem der vorhergehenden Ansprüche, dadurch gekennzeichnet, daß die Faserstrukturlage einseitig oder beidseitig mechanisch verfestigt wird.

7. Verfahren nach einem der vorhergehenden Ansprüche, dadurch gekennzeichnet, daß die Oberflächen durch Kalander, Strahler oder Heizplatten geglättet werden.

8. Verfahren nach einem der vorhergehenden Ansprüche, dadurch gekennzeichnet, daß der Faserstrukturlage über Plattenformwerkzeuge oder formgebende Kalanderwalzen Distanzen darstellende Konturen gegeben werden und anschließend mit polymergleichen Oberflächenmaterialien ein- oder beidseitig zur Herstellung glatter Oberflächen kaschiert wird.

9. Verfahren nach einem der vorhergehenden Ansprüche, dadurch gekennzeichnet, daß das Formteil an einer oder mehreren Seiten mit einer artgleichen thermoplastischen Haft- und/oder Dekorschicht oberflächenbeschichtet wird.

10. Verfahren nach einem der vorhergehenden Ansprüche, dadurch gekennzeichnet, daß bei der Fertigung der verfestigten Faserstrukturlage zur Bildung einer Oberflächenstruktur gravierte Werkzeuge verwendet werden.

11. Verfahren nach einem der vorhergehenden Ansprüche, dadurch gekennzeichnet, daß die Faserstrukturlagen beim Verformen unterschiedlich verdichtet werden.

12. Formteil, hergestellt durch ein Verfahren nach einem der Ansprüche 1 bis 11.

## Claims

1. A method of producing a moulded article, in particular for the vehicle industry, based on polyester, polyamide or polyolefin fibres, having the following steps:
a) producing a consolidated fibrous structure layer comprising one or more inherently homogeneous principal fibrous layers which contain
A) solid and/or hollow chamber fibres consisting of polyester or polyamide or polyolefin with a thickness of from 3 dtex to 1000 dtex and longer than 20 mm;
B)
(i) multicomponent fibres for fibre fusion consisting of polyester or polyamide or polyolefin with a thickness of from 3 dtex to 1000 dtex and longer than 20 mm as solid and/or hollow chamber fibres, or
(ii)a polymer powder for fibre fusion consisting of polyester or polyamide or polyolefin;
wherein the fibres A) and the fibres B)(i) and/or the polymer powder B)(ii) are of the same chemical type and the production takes place thermally and/or mechanically,
b) arrangement of polymer-like fibrous structure layers on one or both sides of the consolidated fibrous structure layer,
c) forming the fibrous structure layers to form a moulded article.

2. A method according to Claim 1, characterised in that the fibres for producing the fibrous structure layer are placed aerodynamically in a mould.

3. A method according to Claim 1 or 2, characterised in that, to produce the fibrous structure layer, the fibres are heated by hot air in a perforated mould, press-moulded and subsequently cooled.

4. A method according to any one of the preceding Claims 1, characterised in that the fibrous structure layer consists of at least two homogeneously mixed principal layers of different mixture, wherein the principal layer facing one surface contains a proportion of 40 to 100 % multicomponent fibres B) and the other principal layers contain a proportion of 0 to 100 % multicomponent fibres B).

5. A method according to Claim 4, characterised in that a stabilising material of like chemical composition is added between the principal layers or on the surfaces of the fibrous structure layer.

6. A method according to any one of the preceding Claims, characterised in that the fibrous structure layer is consolidated mechanically on one side or on both sides.

7. A method according to any one of the preceding Claims, characterised in that the surfaces are smoothed by calenders, radiating elements or heating panels.

8. A method according to any one of the preceding Claims, characterised in that contours representing spacings are applied to the fibrous structure layer via plate moulds or shaping calender rolls and, subsequently, it is laminated on one or both sides with polymer-like surface materials to produce smooth surfaces.

9. A method according to any one of the preceding Claims, characterised in that the moulded article is surface-coated on or more sides with a thermoplastic adhesive layer and/or decorative layer of the same type.

10. A method according to any one of the preceding Claims, characterised in that engraved tools are used to form a surface structure during the production of the consolidated fibrous structure layer.

11. A method according to any one of the preceding Claims, characterised in that the fibrous structure layers are variably compressed during the moulding operation.

12. A moulded article produced by a method according to any one of Claims 1 to 11.

## Revendications

1. Procédé pour la fabrication d'un article moulé, en particulier pour l'industrie automobile, à base de fibres de polyester, de polyamide ou de polyoléfine, présentant les étapes suivantes :
a) préparation d'une couche renforcée de structure en fibres, composée par une ou plusieurs couches de fibres principales, homogènes en soi, qui contiennent
A) des fibres pleines et/ou creuses constituées par du polyester, du polyamide ou de la polyoléfine d'une épaisseur de 3 dtex à 1000 dtex et d'une longueur supérieure à 20 mm
B)
(i) des fibres à plusieurs composants pour la fusion des fibres, constituées par du polyester, du polyamide ou de la polyoléfine d'une épaisseur de 3 dtex à 1000 dtex et d'une longueur supérieure à 20 mm comme fibres pleines et/ou creuses, ou
(ii) une poudre de polymère pour la fusion des fibres, constituée par du polyester, du polyamide ou de la polyoléfine ;
les fibres A) et les fibres B) (i) resp. la poudre de polymère B) (ii) étant de même nature chimique et la préparation ayant lieu par voie thermique et/ou mécanique,
b) disposition de couches de structure en fibres de même polymère sur un côté ou deux côtés de la couche renforcée de structure en fibres,
c) moulage des couches de structure en fibres en un article moulé.

2. Procédé selon la revendication 1, caractérisé en ce que les fibres, pour la préparation de la couche de structure en fibres, sont disposées aérodynamiquement dans un outil de moulage.

3. Procédé selon la revendication 1 ou 2, caractérisé en ce que, pour la préparation de la couche de structure en fibres, les fibres sont chauffées par de l'air chaud dans un outil perforé, comprimées, puis refroidies.

4. Procédé selon l'une quelconque des revendications précédentes, caractérisé en ce que la couche de structure en fibres est constituée par au moins deux couches principales de mélanges différents, mélangées de manière homogène, la couche principale orientée vers une surface contenant une proportion de 40 à 100 % de fibres à plusieurs composants B) et les autres couches principales contenant une proportion de 0 à 100 % de fibres à plusieurs composants B).

5. Procédé selon la revendication 4, caractérisé en ce qu'on ajoute entre les couches principales ou aux surfaces de la couche de structure en fibres un matériau de stabilisation de même composition chimique.

6. Procédé selon l'une quelconque des revendications précédentes, caractérisé en ce que la couche de structure en fibres est renforcée mécaniquement, d'un côté ou des deux côtés.

7. Procédé selon l'une quelconque des revendications précédentes, caractérisé en ce que les surfaces sont lissées par une calandre, un radiateur ou des plaques de chauffage.

8. Procédé selon l'une quelconque des revendications précédentes, caractérisé en ce qu'on donne à la couche de structure en fibres des contours représentant des écartements à l'aide d'outils de moulage de plaques ou de cylindres de calandre moulants, puis en ce qu'on la double, d'un côté ou des deux côtés, avec des matériaux de surface de même polymère pour réaliser des surfaces lisses.

9. Procédé selon l'une quelconque des revendications précédentes, caractérisé en ce que l'article moulé est revêtu en surface, d'un côté ou de plusieurs côtés, par une couche adhésive et/ou décorative thermoplastique de même type.

10. Procédé selon l'une quelconque des revendications précédentes, caractérisé en ce qu'on utilise des outils gravés lors de la préparation de la couche de structure en fibres pour former une structure de surface.

11. Procédé selon l'une quelconque des revendications précédentes, caractérisé en ce que les couches de structure en fibres, lors du moulage, sont soumises à un compactage différent.

12. Article moulé, fabriqué par un procédé selon l'une quelconque des revendications 1 à 11.
